# EUROPEAN PATENT SPECIFICATION

(11) **EP 3 379 782 B1**
(45) Date of publication and mention of the grant of the patent: **08.05.2019**
(21) Application number: 17162699.7
(22) Date of filing: 24.03.2017
(51) Int. Cl.: H04L 12/851, H04L 12/927, H04L 29/08

(54) **NETWORK ENTITY WITH NETWORK APPLICATION PROTOCOL INTERFACE (NAPI)**
NETZWERKENTITÄT MIT NETZWERKANWENDUNGSPROTOKOLLSCHNITTSTELLE (NAPI)
ENTITÉ DE RÉSEAU AVEC INTERFACE DE PROTOCOLE D'APPLICATION DE RÉSEAU (NAPI)

(43) Date of publication of application: 26.09.2018
(73) Proprietor: Deutsche Telekom AG, 53113 Bonn (DE)
(72) Inventor: Baumgarten, Benjamin, 53639 Königswinter (DE); Bayer, Nico, 61231 Bad Nauheim (DE); Monath, Thomas, 23923 Schönberg (DE)
(74) Representative: Patentship Patentanwaltsgesellschaft mbH

(56) References cited:
- US-A1- 2009 141 740
- US-A1- 2012 275 323
- US-A1- 2014 219 088
- US-A1- 2016 056 927

## Description

### TECHNICAL FIELD

The present disclosure relates to a network entity with a network application protocol interface (NAPI) for receiving information about application-specific quality requirements for a plurality of data streams. The disclosure further relates to a communication system with such a network entity and a method for scheduling transmission of a plurality of application-specific data streams based on such information. In particular, the disclosure relates to a method and system to adjust transport management for different applications with such a NAPI, especially in multipath transmission scenarios.

### BACKGROUND

Today's communication networks are designed according to the Open System for Interconnection (OSI) architecture. The OSI architecture provides a hierarchical network structure with seven layers that provide communication from downstairs to upstairs or vice versa. I.e. a physical layer (Layer 1) providing physical data transmission communicates with a data link layer (Layer 2) which communicates with a network layer (Layer 3). The network layer communicates with a transport layer (Layer 4) which communicates with a session layer (Layer 5). The layer 5 communicates with a presentation layer (Layer 6) which communicates with the application layer (Layer 7). There is no direct communication allowed between non-contiguous layers by surrounding the contiguous layers.

Due to these design limitations, applications are not able to efficiently influence the packet transport behavior of data streams or data packets associated with these applications resulting in non-efficient utilization of the network resources and hence reduced Quality-of-Service.

US 2016/056927 A1 describes an MPEG media transport (MMT) cross-layer interface (CLI) for exchanging cross-layer information between the application layer and one or more underlying network layers. The interface allows for top-down and/or bottom-up flow of cross-layer information, which includes QoS, packet-level information or similar that may be used by the involved functions (e.g., to optimize the overall delivery of the media data).

US 2014/219088 A1 describes a cross-layer adaptive streaming client adaptation architecture for adaptive streaming in which video, transport and radio components in the platform cooperate and exchange information towards identifying platform configurations needed to optimize Quality of Experience. A cross-layer adaptation manager extends across each OSI layer. Quality of Service parameters such as throughput, latency, reliability, etc. are measured and exchanged through cross-layer cooperation between the different layers.

US 2012/275323 A1 relates to a scalable policy-controlled packet inspection system for advanced application interface. It discloses an Advanced Socket Interface (ASIF) Functional Component (FC) that interfaces with a session manager (SM) layer, transport layer and applications through separate interfaces. The ASIF FC relies on parameters received from an application through a socket function or packet inspection procedure to extract information related to a session, e.g. port to transmit and receive packets, application protocol, etc. The ASIF FC can create or delete a session and initiate transmission of outgoing data or reception of incoming data depending on the parameters received from the application.

### SUMMARY

It is the object of the invention to provide a concept for an efficient utilization of network resources of a communication network for transmission of application-specific data streams. It is a further object of the invention to improve Quality of Service (QoS) for transmissioin of application-specific data streams.

This object is achieved by the features of the independent claims. Further implementation forms are apparent from the dependent claims, the description and the figures.

The invention is based on the finding that there is no easy to use interface for applications to influence the packet transport behaviour into data networks. This circumstance is one reason for the development of different approaches across the networking layers to overcome uncertainties in the scheduling steering, especially in multipath transmission scenarios. The main challenge is to get information about the transport quality needs of an application and to gather the load and quality information for each transport link for an optimised scheduling. The disclosure introduces a new network application protocol interface (NAPI) which is arranged between the application layer (Layer 7) and the Layers 3 to 5 of the communication network to deliver information about quality requirements for a plurality of application-specific data streams to the transport layer which is configured to manage the transport of the data streams.

In order to describe the invention in detail, the following terms, abbreviations and notations will be used:
- NAPI:: Network Application Protocol Interface
- VoIP:: Voice over IP
- IP:: Internet Protocol
- OSI:: Open Systems Interconnection
- UE:: user equipment, user device
- L1:: layer 1 (physical layer)
- L2:: layer 2 (data link layer)
- L3:: layer 3 (network layer)
- L4:: layer 4 (transport layer)
- L5:: layer 5 (session layer)
- L6:: layer 6 (presentation layer)
- L7:: layer 7 (application layer)
- 5G:: fifth generation mobile network
- LTE:: Long Term Evolution
- AAA:: Authentication, Authorization, Accounting

The communication systems, devices and methods described in the following may be based on the OSI reference model.

The communication systems, devices and methods described in the following may be based on multipath transmission, in particular based on bonding access links to one access channel. In access networks for example, the data rates achievable by DSL depend on the length of the copper line between the residential gateway and the street cabinet or the central office. Very often the users are disappointed if they only get a data rate of a few Mbit/s. One approach to solve the situation is bonding of multiple DSL-lines. The data is distributed to several DSL-links by a gateway or similar device at the user side and encryptedly transferred by use of virtual private networks (VPN) to an entity in the network or at a remote location. There, the data are assembled to the original stream. In the opposite direction the method operates accordingly. The connection can be a DSL connection, as for example xDSL like ADSL or VDSL. However, the connection is not limited to DSL but can also be any other broadband connection, in particular cable internet access, Wi-Fi-to-the-home or the like. Bundling can be performed for any fixed wired access technology and for any non-fixed, wireless access technology, e.g. 3G, 4G or 5G mobile networks or the like. The transfer or rather the corresponding split of the data over the bonding connections can be session based, flow based and/or IP packet based. On the user side, bundling can be performed, e.g. by using an access device such as an integrated access device (IAD). An integrated access device can for example be a DSL modem, a home gateway and/or a residential gateway.

The communication systems, devices and methods described in the following may be based on the OSI reference model. The Open Systems Interconnection (OSI) reference model is a conceptual model that characterizes and standardizes the communication functions of a telecommunication or computing system without regard to its underlying internal structure or technology. The OSI reference model provides interoperability of diverse communication systems with standard protocols. The OSI reference model partitions a communication system into different abstraction layers. Originally, the OSI reference model defined seven layers. A layer serves the layer above it and is served by the layer below it. A layer that provides error-free communications across a network, for example, provides the path needed by applications above it, while it calls the next lower layer to send and receive packets that include the contents of that path. The OSI reference model is defined by the Open Systems Interconnection project at the International Organization for Standardization (ISO), maintained by the identification ISO/IEC 7498-1.

According to a first aspect, the invention relates to a network entity, comprising: a transport layer interface configured to transport a plurality of application-specific data streams over a communication network; a network application protocol interface (NAPI) configured to receive information about application-specific quality requirements with respect to reliability, throughput, latency and/or jitter requirements per application-specific data stream from an application layer of the communication network; and a processor, configured to schedule transmission of the plurality of application-specific data streams over the communication network according to a transport schedule which is based on the information about the application-specific quality requirements received via the NAPI from the application layer.

Such network entity is able to efficiently influence the packet transport behavior of data streams and data packets associated with these applications. Hence, the network entity provides efficient utilization of the network resources and thereby improved Quality-of-Service.

The NAPI provides an easy to use interface for applications to influence the packet transport behaviour into data networks. The NAPI provides information about the transport quality needs of an application and gathers the load and quality information for each transport link for an optimised scheduling. The NAPI is arranged between the application layer (Layer 7) and the transport layer, e.g. Layers 3 to 5 of the communication network to deliver information about quality requirements for a plurality of application-specific data streams to the transport layer which thereby is able to optimally manage the transport of the data streams.

In an implementation form of the network entity, the processor is configured to schedule the plurality of application-specific data streams based on multipath transmission.

This provides the advantage that the multiple paths provided by multipath transmission can be optimally used to transport these multiple data streams according to their application-specific requirements.

In an implementation form of the network entity, the processor is configured to schedule the plurality of application-specific data streams based on bonding a plurality of network paths through the communication network to an aggregated network path.

This provides the advantage that the bonding client and bonding server can optimally bond the different paths to an aggregated path when information about the specific requirements for the different applications and the corresponding data streams is available.

In an implementation form of the network entity, the processor is configured to determine the transport schedule according to an optimization criterion with respect to the application-specific quality requirements of the plurality of application-specific data streams.

Such an optimization criterion gurantees optimal transport of the different data streams according to their requirements.through the communication network.

In an implementation form of the network entity, the processor is configured to schedule transmission of an application-specific data stream over multiple communication links if the NAPI receives information about a premium quality requirement for the application-specific data stream; and to schedule transmission of the application-specific data stream over a single communication link if the NAPI receives information about a normal quality requirement for the application-specific data stream.

Such a network entity provides optimal data transmission depending on the situation. For example in the case of a data transmission where the customers can choose between "normal" and "premium", in case of premium data transmission, the application utilises the NAPI and triggers the network to deliver the data packets over more than one connection and with maximized throughput. In case of normal data transmission resources can be saved and the data transmission can be cheap and efficient for the customer.

In an implementation form of the network entity, the application-specific data stream is associated with a file download of a web store application.

Such a network entity provides optimal download for the web stores customers.

In an implementation form of the network entity, the processor is configured to schedule transmission of an application-specific data stream over multiple communication links if the NAPI receives information about a real-time communication requirement for the application-specific data stream from the application layer.

Such a network entity provides real-time communications with high QoS. The real time communication web service can use this NAPI to utilise more than one connection between the communication endpoints, to assure reliability and service quality.

In an implementation form of the network entity, the multiple communicaton links comprise different network paths through the communication network or different network paths through the communication network and at least one other communication network.

This provides the advantage that data transport can use multiple paths for delivering the data packets resulting in an efficient, i.e. low-lantency and high throughput data transmission.

In an implementation form of the network entity, the NAPI provides an interface between a layer 7 of the communication network and layers 3, 4 and 5 of the communication network.

This provides the advantage that a direct communication between these communication layers is possible which accelerates the communication.

In an implementation form of the network entity, the plurality of application-specific data streams are associated with different services of a user device or with different services of a plurality of user devices.

This provides the advantage that different services for one or multiple users can be efficiently performed when using such network entity.

In an implementation form of the network entity, the information about the application-specific quality requirements comprises information about service level agreements for the plurality of application-specific data streams provided by the applicatioin layer.

This provides the advantage that these service level agreements (SLAs) can be efficiently fulfilled when information about SLAs is available at the transport layer by using such NAPI interface.

In an implementation form of the network entity, the NAPI is configured to provide billing information to the application layer based on the scheduled application-specific data streams.

This provides the advantage that billing can be accurately implemented when information about the scheduled application-specific data streams is available for the billing system by using such NAPI.

In an implementation form of the network entity, the processor is configured to adapt the transport schedeule according to the received information about the application-specific quality requirements.

This provides the advantage that the processor can be flexibly adjusted to changed traffic streams according to opening and closing of different applications by the users. This results in improved QoS for the customers of the communication network.

In an implementation form of the network entity, the processor is configured to establish and/or close network connections through the communication network based on the information received via the NAPI.

This provides the advantage that by using information provided by the NAPI flexible use cases can be implemented and connections can be efficiently established and closed by exploiting these information.

According to a second aspect, the invention relates to a method for scheduling transmission of a plurality of application-specific data streams, the method comprising: transporting a plurality of application-specific data streams over a communication network via a transport layer interface; receiving information about application-specific quality requirements with respect to reliability, throughput, latency and/or jitter requirements per application-specific data stream via a network application protocol interface (NAPI) from an application layer of the communication network; and scheduling transmission of the plurality of application-specific data streams over the communication network according to a transport schedule which is based on the information about the application-specific quality requirements received via the NAPI from the application layer.

Such a method is able to efficiently influence the packet transport behavior of data streams and data packets associated with these applications. Hence, the method provides efficient utilization of the network resources and thereby improved Quality-of-Service.

The NAPI provides an easy to use interface for applications to influence the packet transport behaviour into data networks. The NAPI provides information about the transport quality needs of an application and gathers the load and quality information for each transport link for an optimised scheduling.

### BRIEF DESCRIPTION OF THE DRAWINGS

Further embodiments of the invention will be described with respect to the following figures, in which:
Fig. 1 shows a schematic diagram illustrating the layered architecture of a communication network 100 including a network application protocol interface (NAPI) 137 according to the disclosure.
Fig. 2 shows a schematic diagram illustrating a network entity 200 with a network application protocol interface (NAPI) 137 according to the disclosure.
Fig. 3 shows a schematic diagram of a method 300 for scheduling transmission of a plurality of application-specific data streams according to the disclosure.
Fig. 4 shows a schematic diagram illustrating the generic architecture of a communication network 400 according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The communication network as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The communication network may be implemented by various technologies, in particular utilizing communication networks based on mobile communication standards such as LTE, in particular LTE-A and/or OFDM and successor standards such as 5G or alternatively or additionally based on fixed networks such as DSL access networks, ISDN POTS, etc. The components and network nodes of such an access aggregation system may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

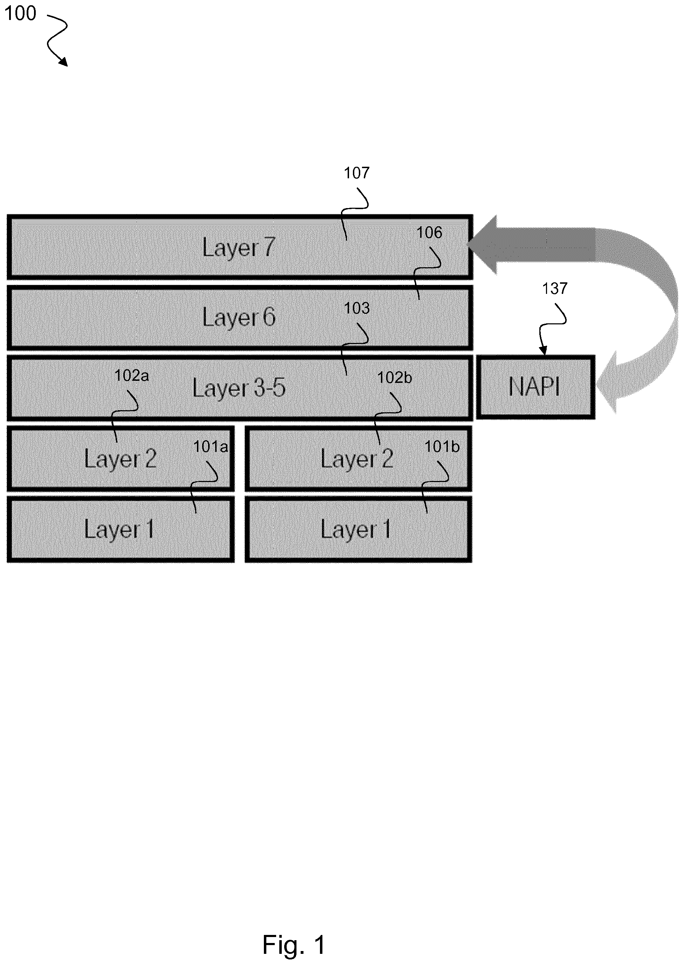

Fig. 1 shows a schematic diagram illustrating the layered architecture of a communication network 100 including a network application protocol interface (NAPI) 137 according to the disclosure. The communication network includes 7 layers for performing communication. Layer 7, 107 is the application layer which is used by applications to communicate on a high application-oriented level. The application layer 107 includes high-level application programming interfaces (APIs) including resource sharing and remote file access. Communication is directed via Layer 6, 106 to Layers 5, 4 and 3. Layer 6, 106 is the presentation layer performing translation of data between a networking service and an application and includes character encoding, data compression and encryption/decrypting. Layer 5 is the Session layer and manages communication sessions, i.e. continuous exchange of information in the form of multiple back-and-forth transmissions between two nodes. Layer 4 is the transport layer and provides reliable transmission of data segments between points on a network, including segmentation, acknowledgement and multiplexing. Layer 3, 103 is the network layer which is used for structuring and managing a multi-node network, including addressing, routing and traffic control, for example by a router or a gateway. Layer 2, 102a, 102b is the data link layer and performs reliable transmission of data frames between two nodes connected by a physical layer. Layer 1, 101a, 101b is the physical layer which performs transmission and reception of raw bit streams over a physical medium.

Traffic can be directed, for example, from a first communication endpoint, e.g. a first user terminal via Layer 1, 101a and Layer 2, 102a of the first terminal to a router or gateway which routes the traffic via Layer 3, 103 to Layer 2, 102b and Layer 1, 101b of a second communication endpoint, e.g. a second user terminal. On network side the traffic can also be directed upwards through Layers 4, 5 and 6 towards the application layer, Layer 7, 107 to inform the network applications about the communication. Alternatively, traffic between the two communication endpoints can be directed via multiple connections through Layer 1, 101a, Layer 2, 102a, Layer 3-5, 103, Layer 2, 102b and Layer 1, 101b. In one exemplary implementation, Layer 1, 101a of first communication endpoint can include sublayers 101a.1, 101a.2, 101a.3, etc.; Layer 2, 102a of first communication endpoint can include sublayers 102a.1, 102a.2, 102a.3, etc.; Layer 2, 102b of second communication endpoint can include sublayers 102b.1, 102b.2, 102b.3, etc.; Layer 1, 101b of second communication endpoint can include sublayers 101b.1, 101b.2, 101b.3, etc. (Sublayers are not depicted in Figure 1). Traffic between the two communication endpoints can be directed via any of these sublayers creating multiple connections between these communication endpoints, i.e. a multipath connection.

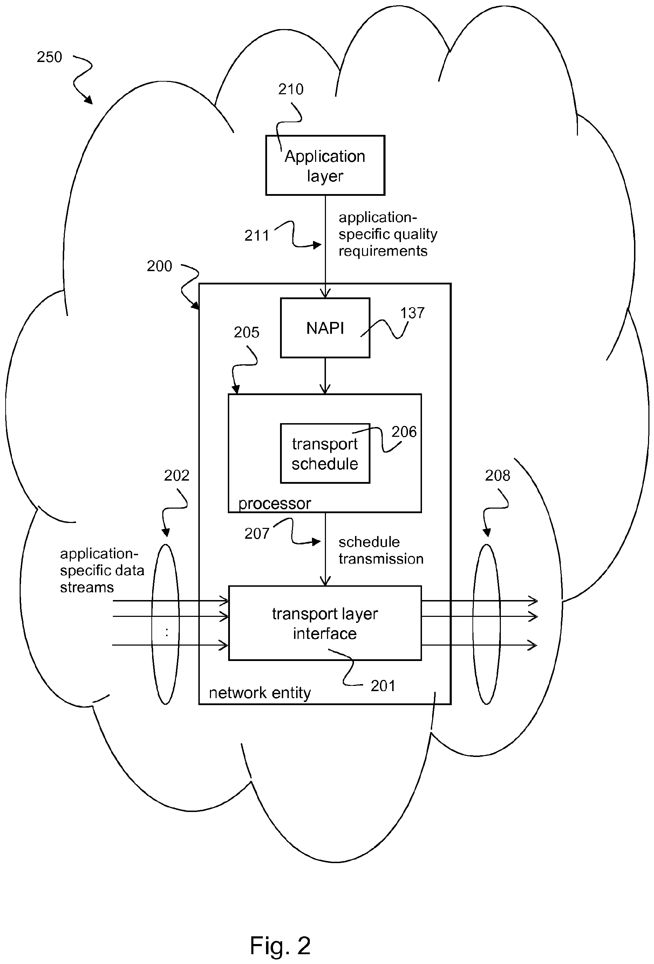

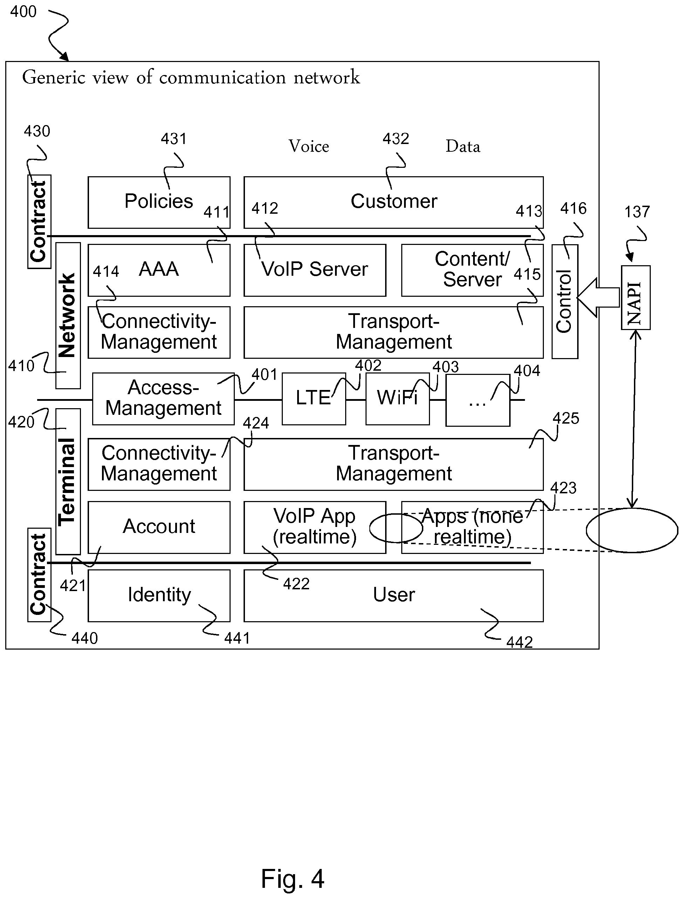

The new NAPI interface 137 between Layers 3, 4, 5, 103 and Layer 7, 107 provides a direct interface for influencing the traffic by the network applications. For example the application layer 107 can inform the network layer 103 about a required quality of application-specific data streams, e.g. as described below with respect to Figures 2 and 4.

Figure 1 schematically illustrates a method and system that allows easy to use interaction between the applications and the transport management inside the network. The core of the system is the so called NAPI (network application protocol interface) 137. This NAPI 137 provides the possibility to adjust the transport behaviour of the network for each application and their specific QoS demands (reliability, throughput, latency, jitter, ...).

Two simple examples explain the overall functionality: Example 1) A web store provides file downloads. The web stores customers can choose between "normal" and "premium" download. In case of premium download, the web store application utilises the NAPI 137 and triggers the network to deliver the data packets over more than one connection and with maximized throughput. Example 2) A real time communication web service can use this NAPI 137 to utilise more than one connection between the communication endpoints, to assure reliability and service quality.

With this innovation the transport management inside the network does not have to find out the needs of different applications because applications can tell what is necessary directly to the transport management. With this NAPI 137 and additional functionalities it is also possible for transport network providers to bill this transport adjustment and to manage the payment.

Fig. 2 shows a schematic diagram illustrating a network entity 200 with a network application protocol interface (NAPI) 137 according to the disclosure.

The network entity 200 includes a transport layer interface 201, a network application protocol interface (NAPI) 137 and a processor 205. The NAPI corresponds to the NAPI 137 described above with respect to Fig. 1.

The transport layer interface 201 is configured to transport a plurality of application-specific data streams 202 over a communication network 250. The network application protocol interface (NAPI) 137 is configured to receive information about application-specific quality requirements 211 with respect to reliability, throughput, latency and/or jitter requirements per application-specific data stream 202 from an application layer 210 of the communication network 250. The processor 205 is configured to schedule transmission of the plurality of application-specific data streams 202 over the communication network 250 according to a transport schedule 206 which is based on the information about the application-specific quality requirements 211 received via the NAPI 137 from the application layer 210.

An application-specific data stream includes data packets that are associated with a specific application, e.g. data packets of a video streaming which user 1 is initiating or VoIP packets of a VoIP connection initiated by user 2, etc.

The application layer 210 corresponds to Layer 7 described above with respect to Fig. 1. The transport layer interface 201 corresponds to an interface with at least one of the layers 3, 4, 5 (103) as described above with respect to Fig. 1.

In one implementation the processor 205 may be configured to schedule the plurality of application-specific data streams 202 based on multipath transmission, i.e. transmission via multiple paths through the communication network 250. In one implementation the processor 205 may be configured to schedule the plurality of application-specific data streams 202 based on bonding a plurality of network paths through the communication network 250 to an aggregated network path. The network paths may be aggregated via tunneled or non-tunneled data paths to the aggregated network path that may be routed to a bonding server, e.g. an access aggregation point (AAP).

The processor 205 may be configured to determine the transport schedule 206 according to an optimization criterion with respect to the application-specific quality requirements 211 of the plurality of application-specific data streams 202. E.g. some data streams such as Voice-over-IP have real-time requirements with minimum latency but with moderate throughput requirements while other data streams such as downloading or streaming videos have maximum throughput requirements but with moderate latency requirements. The optimization criterion determines an overall optimization function to fulfill the requirements of all data streams as best as possible.

The processor 205 may be configured to schedule transmission of an application-specific data stream 202 over multiple communication links if the NAPI 137 receives information about a premium quality requirement for the application-specific data stream 202 and to schedule transmission of the application-specific data stream 202 over a single communication link if the NAPI 137 receives information about a normal quality requirement for the application-specific data stream 202. For example according to Example 1) described above with respect to Fig. 1, where a web store provides file downloads. The web stores customers can choose between "normal" and "premium" download. In case of premium download, the web store application utilises the NAPI 137 and triggers the network to deliver the data packets over more than one connection and with maximized throughput.

The application-specific data stream 202 may be associated with a file download of a web store application, e.g. according to Example 1).

The processor 205 may be configured to schedule transmission of an application-specific data stream 202 over multiple communication links if the NAPI 137 receives information about a real-time communication requirement for the application-specific data stream 202 from the application layer 210. For example according to Example 2) described above with respect to Fig. 1, where a real time communication web service can use this NAPI 137 to utilise more than one connection between the communication endpoints, to assure reliability and service quality.

The multiple communicaton links may include different network paths through the communication network 250 or different network paths through the communication network 250 and at least one other communication network (not shown in Fig. 2). For example a first communication path may range through a fixed network such as DSL or POTS and a second communication path may range through a mobile network such as LTE or WiFi.

The NAPI 137 may provide an interface between a Layer 7, e.g. an application layer 107 as described above with respect to Fig. 1, of the communication network 250 and at least one of layers 3, 4 and 5, e.g. the layers 103 as described above with respect to Fig. 1, of the communication network 250.

The plurality of application-specific data streams 202 may be associated with different services of a user device or with different services of a plurality of user devices, e.g. a VoIP service for user 1 or a video streaming service for user 2 or VoIP services for users 1 to N or for a VoIP service for user 1 and a streaming service for user 1 and other services for other users.

The information about the application-specific quality requirements 211 may include information about service level agreements, e.g. contracts between user and network operator, for the plurality of application-specific data streams 202 provided by the applicatioin layer 210.

The NAPI 137 may be configured to provide billing information to the application layer 210 based on the scheduled application-specific data streams 208. For example, as described above with respect to Fig. 1, with this NAPI 137 and additional functionalities transport network providers can bill this transport adjustment and manage the payment.

The processor 205 may be configured to adapt the transport schedule 206 according to the received information about the application-specific quality requirements 211. Adaptation may be performed at run-time, e.g. within a data packet subframe or from subframe to subframe.

The processor 205 may be configured to establish and/or close network connections through the communication network 250 based on the information 211 received via the NAPI 137.

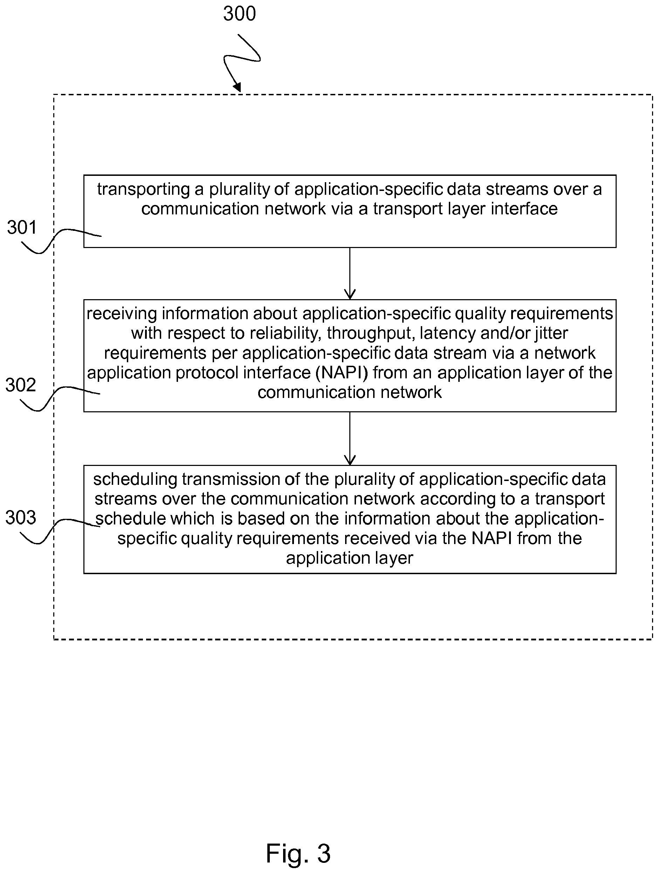

Fig. 3 shows a schematic diagram of a method 300 for scheduling transmission of a plurality of application-specific data streams according to the disclosure.

The method 300 may be implemented on a processor 205 as described above with respect to Fig. 2 for scheduling transmission of a plurality of application-specific data streams, e.g. data streams 202 as described above with respect to Fig. 2.

The method 300 includes transporting 301 a plurality of application-specific data streams 202 over a communication network 250 via a transport layer interface 201, e.g. as described above with respect to Fig. 2.

The method 300 includes receiving 302 information about application-specific quality requirements 211 with respect to reliability, throughput, latency and/or jitter requirements per application-specific data stream 202 via a network application protocol interface (NAPI) 137 from an application layer 137 of the communication network 250, e.g. as described above with respect to Fig. 2.

The method further includes scheduling 303 transmission of the plurality of application-specific data streams 202 over the communication network 250 according to a transport schedule 206 which is based on the information about the application-specific quality requirements 211 received via the NAPI 137 from the application layer 210, e.g. as described above with respect to Fig. 2.

Fig. 4 shows a schematic diagram illustrating the generic architecture of a communication network 400 according to the disclosure. The communication network 400 may correspond to the communication network 100 described above with respect to Fig. 1 or to the communication network 250 as described above with respect to Fig. 2.

The communication network 400 is partitioned into a Network section 410 including functionalies and modules on the network side and a terminal section 420 including functionalities and modules on the user terminal side. A contract 430 on network side determines policies 431 for a multiple customers 432, e.g. with respect to data and voice. A contract 440 on user terminal side determines identity 441 of the user 442 (or identities for for multiple users) or the customer which is associated with the communication network 400, e.g. an IMSI (International Mobile Subscriber Identifier) or a hardware identifier.

Functionalies and modules on the network side include AAA (Authentication, Authorization, Accounting) 411 for authenticating, authorizing and accounting the customers 432, Connectivity-Management 414 for establishing and/or closing connections for customers 432. Functionalies and modules on the network side include VoIP server 412 for providing voice-over-IP service to customers 432, content server 413 for providing file download, e.g. video streaming or audio streaming to customers 432 and transport management 415 for transporting the plurality of data streams associated with connections established by connectivity management 414. A control mudule 416 is used to control transport management 415 with respect to different requirements from VoIP server 412 and Content server 413. The NAPI 137 provides an interface between transport management 415 and application layer, e.g. the Apps 422, 423 on user terminal side 420 in order to influence the control module 416 for controlling transport management 415 transporting the plurality of application-specific data streams based on quality requirements of the different applications, e.g. as described above with respect to Figures 1 and 2.

Functionalies and modules on the user terminal side include Account 421 for providing an account to the user 442, Connectivity-Management 424 for establishing and/or closing connections for the user 442. Functionalies and modules on the user terminal side include VoIP application 422, e.g. a real-time application on the user terminal, different Apps 423 without real-time requirements on the user terminal and transport management 425 for transporting the data streams associated with connections established by connectivity management 424 for the user 442.

Connectivity management 414, 424 on network side and user terminal side are connected with access management 401 to provide access to the channel and to initiate connection via LTE 402, WiFi 403 and other technologies 404, e.g. DSL, etc.

Connectivity Management 414, 424 establishes and closes network connections situationally. Transport Management 415, 425 manages seamlessness transport adaption according to the use case (e.g. low latency/ redundancy versus maximum throughput). The NAPI interface 137 between Apps 422, 423 and the transport management 415 provides new opportunity for improved service models.

Basic requirements for connectivity are coverage/availability, maximum throughput (goodput) and redundancy/reliability (low latency). In most cases maximum goodput, maximum redundancy and maximum coverage are not possible at the same time. Each application can have a mixture of these basic requirements. Each device/user can use more than one application at the same timeslot. The network engine, e.g. the processor 205 described above with respect to Fig. 2 may be adjustable to fulfil requirements set by used applications.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 300 as described above with respect to Fig. 3 and the techniques described above with respect to Figs. 1-2 and 4. Such a computer program product may include a readable non-transitory storage medium storing program code thereon for use by a computer. The program code may perform the methods and techniques as described above with respect to Figures 1 to 4.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A network entity (200), comprising:
a transport layer interface (201) configured to transport a plurality of application-specific data streams (202) over a communication network (250);
a network application protocol interface, NAPI, (137) providing a protocol interface between an application layer (210, 107) and at least one of a network layer, a transport layer and a session layer according to an OSI reference model of the communication network, wherein the NAPI is configured to receive information about application-specific quality requirements (211) with respect to reliability, throughput, latency and/or jitter requirements per application-specific data stream (202) from the application layer (210) of the communication network (250); and
a processor (205), configured to schedule transmission of the plurality of application-specific data streams (202) over the communication network (250) according to a transport schedule (206) which is based on the information about the application-specific quality requirements (211) received via the NAPI (137) from the application layer (210),
wherein the NAPI (137) is configured to provide billing information to the application layer (210) based on the scheduled application-specific data streams (208).

2. The network entity (200) of claim 1,
wherein the processor (205) is configured to schedule the plurality of application-specific data streams (202) based on multipath transmission.

3. The network entity (200) of claim 1 or 2,
wherein the processor (205) is configured to schedule the plurality of application-specific data streams (202) based on bonding a plurality of network paths through the communication network (250) to an aggregated network path.

4. The network entity (200) of one of the preceding claims,
wherein the processor (205) is configured to determine the transport schedule (206) according to an optimization criterion with respect to the application-specific quality requirements (211) of the plurality of application-specific data streams (202).

5. The network entity (200) of one of the preceding claims,
wherein the processor (205) is configured to schedule transmission of an application-specific data stream (202) over multiple communication links if the NAPI (137) receives information about a premium quality requirement for the application-specific data stream (202); and to schedule transmission of the application-specific data stream (202) over a single communication link if the NAPI (137) receives information about a normal quality requirement for the application-specific data stream (202).

6. The network entity (200) of claim 5,
wherein the application-specific data stream (202) is associated with a file download of a web store application.

7. The network entity (200) of one of the preceding claims,
wherein the processor (205) is configured to schedule transmission of an application-specific data stream (202) over multiple communication links if the NAPI (137) receives information about a real-time communication requirement for the application-specific data stream (202) from the application layer (210).

8. The network entity (200) of one of claims 5 to 7,
wherein the multiple communicaton links comprise different network paths through the communication network (250) or different network paths through the communication network (250) and at least one other communication network.

9. The network entity (200) of one of the preceding claims,
wherein the NAPI (137) provides an interface between a layer 7 (107) of the communication network (250) and layers 3, 4 and 5 (103) of the communication network (250).

10. The network entity (200) of one of the preceding claims,
wherein the plurality of application-specific data streams (202) are associated with different services of a user device or with different services of a plurality of user devices.

11. The network entity (200) of one of the preceding claims,
wherein the information about the application-specific quality requirements (211) comprises information about service level agreements for the plurality of application-specific data streams (202) provided by the applicatioin layer (210).

12. The network entity (200) of one of the preceding claims,
wherein the processor (205) is configured to adapt the transport schedule (206) according to the received information about the application-specific quality requirements (211).

13. The network entity (200) of one of the preceding claims,
wherein the processor (205) is configured to establish and/or close network connections through the communication network (250) based on the information (211) received via the NAPI (137).

14. A method (300) for scheduling transmission of a plurality of application-specific data streams (202), the method (300) comprising:
transporting (301) a plurality of application-specific data streams (202) over a communication network (250) via a transport layer interface (201);
receiving (302) information about application-specific quality requirements (211) with respect to reliability, throughput, latency and/or jitter requirements per application-specific data stream (202) via a network application protocol interface (NAPI) (137) from an application layer (137) of the communication network (250), wherein the NAPI provides a protocol interface between an application layer (210, 107) and at least one of a network layer, a transport layer and a session layer according to an OSI reference model of the communication network; and
scheduling (303) transmission of the plurality of application-specific data streams (202) over the communication network (250) according to a transport schedule (206) which is based on the information about the application-specific quality requirements (211) received via the NAPI (137) from the application layer (210); and
providing, via the NAPI (137), billing information to the application layer (210) based on the scheduled application-specific data streams (208).

## Patentansprüche

1. Netzwerkentität (200), die aufweist:
eine Transportschicht-Schnittstelle (201), die konfiguriert ist, eine Vielzahl von anwendungsspezifischen Datenströmen (202) über ein Kommunikationsnetzwerk (250) zu transportieren;
eine Netzwerkanwendungs-Protokollschnittstelle, NAPI, (137), die eine Protokollschnittstelle zwischen einer Anwendungsschicht (210, 107) und mindestens einer einer Netzwerkschicht, einer Transportschicht und einer Sitzungsschicht gemäß einem OSI-Referenzmodell des Kommunikationsnetzwerk bereitstellt, wobei die NAPI konfiguriert ist, Informationen über anwendungsspezifische Qualitätsanforderungen (211) bezüglich Zuverlässigkeit, Durchsatz, Latenz und/oder Jitter-Anforderungen pro anwendungsspezifischen Datenstrom (202) von der Anwendungsschicht (210) des Kommunikationsnetzwerks (250) zu empfangen; und
einen Prozessor (205), der konfiguriert ist, die Übertragung der Vielzahl der anwendungsspezifischen Datenströme (202) über das Kommunikationsnetzwerk (250) gemäß einem Transportplan (206) zu planen, der auf den Informationen über die anwendungsspezifischen Qualitätsanforderungen (211) beruht, die über die NAPI (137) von der Anwendungsschicht (210) empfangen werden,
wobei die NAPI (137) konfiguriert ist, beruhend auf den geplanten anwendungsspezifischen Datenströmen (208) Abrechnungsinformationen an die Anwendungsschicht (210) zu liefern.

2. Netzwerkentität (200) nach Anspruch 1,
wobei der Prozessor (205) konfiguriert ist, die Vielzahl der anwendungsspezifischen Datenströme (202) beruhend auf einer Mehrfachübertragung zu planen.

3. Netzwerkentität (200) nach Anspruch 1 oder 2,
wobei der Prozessor (205) konfiguriert ist, die Vielzahl der anwendungsspezifischen Datenströme (202) beruhend auf einer Verbindung einer Vielzahl von Netzwerkpfaden durch das Kommunikationsnetzwerk (250) zu einem vereinigten Netzwerkpfad zu planen.

4. Netzwerkentität (200) nach einem der vorhergehenden Ansprüche,
wobei der Prozessor (205) konfiguriert ist, den Transportplan (206) gemäß einem Optimierungskriterium bezüglich der anwendungsspezifischen Qualitätsanforderungen (211) der Vielzahl der anwendungsspezifischen Datenströme (202) festzulegen.

5. Netzwerkentität (200) nach einem der vorhergehenden Ansprüche,
wobei der Prozessor (205) konfiguriert ist, die Übertragung eines anwendungsspezifischen Datenstroms (202) über mehrere Kommunikationsverbindungen zu planen, wenn die NAPI (137) Informationen über eine hochwertige Qualitätsanforderung für den anwendungsspezifischen Datenstrom (202) empfängt; und die Übertragung des anwendungsspezifischen Datenstroms (202) über eine einzelne Kommunikationsverbindung zu planen, wenn die NAPI (137) Informationen über eine normale Qualitätsanforderung für den anwendungsspezifischen Datenstrom (202) empfängt.

6. Netzwerkentität (200) nach Anspruch 5,
wobei der anwendungsspezifische Datenstrom (202) mit einem Herunterladen einer Datei einer Online-Shop-Anwendung verbunden ist.

7. Netzwerkentität (200) nach einem der vorhergehenden Ansprüche,
wobei der Prozessor (205) konfiguriert ist, die Übertragung eines anwendungsspezifischen Datenstroms (202) über mehrere Kommunikationsverbindungen zu planen, wenn die NAPI (137) Informationen über eine Echtzeitkommunikationsanforderung für den anwendungsspezifischen Datenstrom (202) von der Anwendungsschicht (210) empfängt.

8. Netzwerkentität (200) nach einem der Ansprüche 5 bis 7,
wobei die mehreren Kommunikationsverbindungen unterschiedliche Netzwerkpfade durch das Kommunikationsnetzwerk (250) oder unterschiedliche Netzwerkpfade durch das Kommunikationsnetzwerk (250) und mindestens ein anderes Kommunikationsnetzwerk aufweisen.

9. Netzwerkentität (200) nach einem der vorhergehenden Ansprüche,
wobei die NAPI (137) eine Schnittstelle zwischen einer Schicht 7 (107) des Kommunikationsnetzwerks (250) und den Schichten 3, 4 und 5 (103) des Kommunikationsnetzwerks (250) bereitstellt.

10. Netzwerkentität (200) nach einem der vorhergehenden Ansprüche,
wobei die Vielzahl der anwendungsspezifischen Datenströme (202) mit unterschiedlichen Diensten einer Benutzervorrichtung oder mit unterschiedlichen Diensten einer Vielzahl von Benutzervorrichtungen verbunden ist.

11. Netzwerkentität (200) nach einem der vorhergehenden Ansprüche,
wobei die Informationen über die anwendungsspezifischen Qualitätsanforderungen (211) Informationen über Dienstgütevereinbarungen für die Vielzahl der anwendungsspezifischen Datenströme (202) aufweisen, die durch die Anwendungsschicht (210) bereitgestellt werden.

12. Netzwerkentität (200) nach einem der vorhergehenden Ansprüche,
wobei der Prozessor (205) konfiguriert ist, den Transportplan (206) gemäß den empfangenen Informationen über die anwendungsspezifischen Qualitätsanforderungen (211) anzupassen.

13. Netzwerkentität (200) nach einem der vorhergehenden Ansprüche,
wobei der Prozessor (205) konfiguriert ist, Netzwerkverbindungen durch das Kommunikationsnetzwerk (250) beruhend auf den Informationen (211) herzustellen und/oder zu schließen, die über die NAPI (137) empfangen werden.

14. Verfahren (300) zum Planen einer Übertragung einer Vielzahl von anwendungsspezifischen Datenströmen (202), wobei das Verfahren (300) aufweist:
Transportieren (301) einer Vielzahl von anwendungsspezifischen Datenströmen (202) über ein Kommunikationsnetzwerk (250) über eine Transportschicht-Schnittstelle (201);
Empfangen (302) von Informationen über anwendungsspezifische Qualitätsanforderungen (211) bezüglich Zuverlässigkeit, Durchsatz, Latenz und/oder Jitter-Anforderungen pro anwendungsspezifischen Datenstrom (202) über eine Netzwerkanwendungs-Protokollschnittstelle (NAPI) (137) von einer Anwendungsschicht (137) des Kommunikationsnetzwerks (250), wobei die NAPI eine Protokollschnittstelle zwischen einer Anwendungsschicht (210, 107) und mindestens einer einer Netzwerkschicht, einer Transportschicht und einer Sitzungsschicht gemäß einem OSI-Referenzmodell des Kommunikationsnetzwerks bereitstellt; und
Planen (303) der Übertragung der Vielzahl der anwendungsspezifischen Datenströme (202) über das Kommunikationsnetzwerk (250) gemäß einem Transportplan (206), der auf den Informationen über die anwendungsspezifischen Qualitätsanforderungen (211) beruht, die über die NAPI (137) von der Anwendungsschicht (210) empfangen werden; und
Liefern über die NAPI (137) von Abrechnungsinformationen an die Anwendungsschicht (210) beruhend auf den geplanten anwendungsspezifischen Datenströmen (208).

## Revendications

1. Entité de réseau (200), comprenant :
une interface de couche transport (201) prévue pour transporter une pluralité de flux de données spécifiques à une application (202) via un réseau de communication (250) ;
une interface de protocole d'application de réseau NAPI (137) assurant une interface de protocole entre une couche d'application (210, 107) et une couche réseau et/ou une couche transport et/ou une couche session conformément à un modèle de référence OSI du réseau de communication, où la NAPI est prévue pour recevoir des informations sur des exigences de qualité spécifiques à l'application (211) relativement à la fiabilité, au débit, à la latence et/ou aux exigences de gigue par flux de données spécifique à une application (202) provenant de la couche d'application (210) du réseau de communication (250) ; et
un processeur (205), prévu pour programmer la transmission de la pluralité de flux de données spécifiques à une application (202) par le réseau de communication (250) conformément à un cadencement de transport (206) basé sur les informations concernant les exigences de qualité spécifiques à l'application (211) reçues via la NAPI (137) en provenance de la couche d'application (210),
où la NAPI (137) est prévue pour délivrer des informations de facturation à la couche d'application (210) sur la base du flux de données spécifiques à une application (208) programmé.

2. Entité de réseau (200) selon la revendication 1,
où le processeur (205) est prévu pour programmer la pluralité de flux de données spécifiques à une application (202) sur la base d'une transmission à trajets multiples.

3. Entité de réseau (200) selon la revendication 1 ou la revendication 2,
où le processeur (205) est prévu pour programmer la pluralité de flux de données spécifiques à une application (202) sur la base d'un chaînage en un seul chemin réseau agrégé d'une pluralité de chemins réseau par le réseau de communication (250).

4. Entité de réseau (200) selon l'une des revendications précédentes,
où le processeur (205) est prévu pour déterminer le cadencement de transport (206) conformément à un critère d'optimisation relativement aux exigences de qualité spécifiques à l'application (211) de la pluralité de flux de données spécifiques à une application (202).

5. Entité de réseau (200) selon l'une des revendications précédentes,
où le processeur (205) est prévu pour programmer la transmission d'un flux de données spécifique à une application (202) par plusieurs liaisons de communication si la NAPI (137) reçoit des informations concernant une exigence de qualité optimale pour le flux de données spécifique à une application (202) ; et pour programmer la transmission du flux de données spécifique à une application (202) par une seule liaison de communication si la NAPI (137) reçoit des informations concernant une exigence de qualité normale pour le flux de données spécifique à une application (202).

6. Entité de réseau (200) selon la revendication 5,
où le flux de données spécifique à une application (202) est associé à un téléchargement de fichier d'une application de boutique en ligne.

7. Entité de réseau (200) selon l'une des revendications précédentes,
où le processeur (205) est prévu pour programmer la transmission d'un flux de données spécifique à une application (202) par plusieurs liaisons de communication si la NAPI (137) reçoit des informations concernant une exigence de communication en temps réel pour le flux de données spécifique à une application (202) en provenance de la couche d'application (210).

8. Entité de réseau (200) selon l'une des revendications 5 à 7,
où les plusieurs liaisons de communication comprennent différents chemins réseau sur le réseau de communication (250) ou différents chemins réseau sur le réseau de communication (250) et au moins un autre réseau de communication.

9. Entité de réseau (200) selon l'une des revendications précédentes,
où la NAPI (137) assure une interface entre une couche 7 (107) du réseau de communication (250) et les couches 3, 4 et 5 (103) du réseau de communication (250).

10. Entité de réseau (200) selon l'une des revendications précédentes,
où la pluralité de flux de données spécifiques à une application (202) est associée à différents services d'un dispositif d'utilisateur ou à différents services d'une pluralité de dispositifs d'utilisateur.

11. Entité de réseau (200) selon l'une des revendications précédentes,
où les informations concernant les exigences de qualité spécifiques à l'application (211) comprennent des informations concernant des accords de niveau de service pour la pluralité de flux de données spécifiques à une application (202) fournis par la couche d'application (210).

12. Entité de réseau (200) selon l'une des revendications précédentes,
où le processeur (205) est prévu pour adapter le cadencement de transport (206) en fonction des informations reçues concernant les exigences de qualité spécifiques à l'application (211).

13. Entité de réseau (200) selon l'une des revendications précédentes,
où le processeur (205) est prévu pour établir et/ou clore des connexions de réseau sur le réseau de communication (250) sur la base des informations (211) reçues via la NAPI (137).

14. Procédé (300) de programmation d'une transmission d'une pluralité de flux de données spécifiques à une application (202), ledit procédé (300) comprenant :
le transport (301) d'une pluralité de flux de données spécifiques à une application (202) sur un réseau de communication (250) via une interface de couche transport (201) ;
la réception (302) d'informations sur des exigences de qualité spécifiques à l'application (211) relativement à la fiabilité, au débit, à la latence et/ou aux exigences de gigue par flux de données spécifique à une application (202) via une interface de protocole d'application de réseau (NAPI) (137), en provenance d'une couche d'application (137) du réseau de communication (250), la NAPI assurant une interface de protocole entre une couche d'application (210, 107) et une couche réseau et/ou une couche transport et/ou une couche session conformément à un modèle de référence OSI du réseau de communication ; et
la programmation (303) de la transmission de la pluralité de flux de données spécifiques à une application (202) par le réseau de communication (250) conformément à un cadencement de transport (206) sur la base des informations concernant les exigences de qualité spécifiques à l'application (211) reçues via la NAPI (137) en provenance de la couche d'application (210) ; et
la délivrance via la NAPI (137) d'informations de facturation à la couche d'application (210) sur la base sur la base du flux de données spécifiques à une application (208) programmé.
